# EUROPEAN PATENT APPLICATION

(11) **EP 4 610 341 A1**
(43) Date of publication of application: **03.09.2025**
(21) Application number: 25160078.9
(22) Date of filing: 25.02.2025
(51) Int. Cl.: C12G 3/07, C12H 1/22, C12G 1/00

(54) **PLANT AND PROCESS FOR MATURING A FERMENTED LIQUID**

(30) Priority: 29.02.2024 IT 202400004468
(71) Applicant: Sordato S.r.l., 37032 Monteforte d'Alpone (IT)
(72) Inventor: SORDATO, Giorgio, 35122 Padova (PD) (IT)
(74) Representative: Gallo, Luca

(57) **Abstract**

Plant (1) for maturing a fermented liquid (L), which comprises a support structure (2) on which a maturation tank (3) intended to contain aromatizing products (11) and a washing tank (4) intended to contain a washing fluid are mounted. The plant (1) also comprises a connection circuit (5), which hydraulically connects the maturation tank (3) and the washing tank (4), and comprises a delivery line (51), connected to a containment tank (10) containing the fermented liquid (L) and to the maturation tank (3), a return line (52), connected to the maturation tank (3) and to the containment tank (10), an introduction line (53), connected to the washing tank (4) and to the delivery line (51) at a first branch point (510) and a re-entry line (54), connected to the washing tank (4) and to the return line (52) at a second branch point (520). The plant (1) also comprises a first and a second valve group (6, 60), placed to intercept the connection circuit (5) respectively at the first and second branch point (510, 520) and actuatable for adjusting respectively the flow from the or returning to the maturation tank (3) of the fermented liquid (L) or of the washing fluid. The plant (1) also comprises pumping means (7), placed to intercept the connection circuit (5), downstream of the first or upstream of the second branch point (510, 520), and arranged for forcing the circulation of the fermented liquid (L) and/or of the washing fluid along the connection circuit (5).

## Description

### Field of application

The present invention regards a plant for maturing a fermented liquid, in particular wine, and a process for maturing a fermented liquid through said plant, according to the preamble of the respective independent claims.

The present plant for maturing a fermented liquid and relative maturation process are employable for carrying out a maturation treatment aimed to confer organoleptic properties to a fermented liquid, in order to obtain an alcoholic beverage. Therefore, the plant and the process, object of the present invention, are inserted in the field of production of alcoholic beverages and of plants for producing such beverages, in particular wine.

The present plant and maturation process are therefore intended to be advantageously employed in wineries for maturing wine.

### State of the art

In the field of production of alcoholic beverages, in particular wine, the maturation process covers considerable importance, since it allows wine to develop its own organoleptic qualities, for example acquiring stability, clarity and new aromas.

In particular, the maturation occurs following the must fermentation process, which allows an enological liquid to reach the desired alcohol content through the transformation of sugars present in the must into ethyl alcohol.

At the end of such fermentation process, in fact, the wine is bitter and hard-edged and the aforesaid maturation process facilitates the harmonizing between its components, for example between the acidity and the tannins.

The maturation of the wine provides for a static process, in which a fermented liquid is placed in a suitable container in order to allow it to be enriched with substances, in particular tannins, which allow it to take on new aromas and flavors.

More in detail, such process can directly employ containers made of wood, e.g. wood barrels, in which therefore the fermented liquid is placed in contact with the wooden walls of the container, or containers made of steel, concrete or fiberglass in which wood-based aromatizing products are placed, e.g. wood chips, wooden slats etc., which release the substances to the fermented liquid which allow the latter to develop the desired aromas and flavors.

In particular, the wood barrels can have different capacity (large barrels, tonneaux, barriques), therefore able to contain a different quantity of wine undergoing maturation. In particular, the barrels with smaller capacity (barriques) allow a greater quantity of wine to come into contact with the internal surface of the barrel, facilitating an improved exchange with the substances present in the wood and thus ensuring greater aromatic complexity of the fermented liquid.

Such type of maturation in barrels thus provides for long stay times of the liquid, from several months to several years. This determines an increase of the final cost of the product, and involves the need for the producer to have large spaces for storing the barrels, as well as of course have a considerable number of containers.

In order to overcome such drawbacks, it is known to use the above-described containers made of steel, concrete or fiberglass and inserting wood chips or slats at their interior.

Such second maturation type allows reducing the conservation times of the wine in the container to several months, and therefore an economic savings for the producer, as well as reducing the spaces and equipment necessary for carrying out the various operations of maturation.

However, also such maturation technique has in practice proven that it does not lack drawbacks.

The main drawback lies in the fact that the above-described maturation technique still has relatively long times, even if shorter than the maturation in wood barrels. Indeed, as described above, the fermented liquid must remain in the steel containers for several months.

In addition. such maturation technique does not allow obtaining a high quality and uniformity of the final product. More in detail, during the transfer of the fermented liquid from the tank to the container for maturing (and vice versa), the fermented liquid itself can come in contact with the oxygen of the air, risking oxidation. This involves a loss of the quality of the final product, which therefore strongly depends on the care given by the producer during the emptying and loading steps.

Also known are plants for maturing alcoholic beverages, such as for example the plants described in the documents US 2017292100 and IT 201900001353, which are provided with a tank and a container for maturation, connected to each other by a hydraulic circuit comprising pipes, valves and pumps for the transfer of the fermented liquid from the tank to the container in order to allow its maturation.

However, even such plants of known type have in practice proven that they do not lack drawbacks, in particular it is complex to ensure a cleaning and hygienization level suitable for the requested process between the maturation of a fermented liquid and the maturation of subsequent fermented liquid, for example due to the difficulties of accessing within the pipes.

### Presentation of the invention

In this situation, the problem underlying the present invention is to overcome the drawbacks of the abovementioned solutions of known type, by providing a plant for maturing alcoholic beverages and a process for maturing alcoholic beverages through said plant, which allow reducing the times and costs of the process for maturing an alcoholic beverage.

Further object of the present invention is to provide a plant for maturing alcoholic beverages and a process for maturing alcoholic beverages through said plant, which allow a facilitated loading and unloading of aromatizing products within maturation tanks.

Further object of the present invention is to provide a plant for maturing alcoholic beverages and a process for maturing alcoholic beverages through said plant, which provide for the use both of wood chips and wooden slats.

Further object of the present invention is to provide a plant for maturing alcoholic beverages and a process for maturing alcoholic beverages through said plant, which allow an efficient use of the wood chips or wooden slats.

Further object of the present invention is to provide a plant for maturing alcoholic beverages and a process for maturing alcoholic beverages through said plant, which allow a facilitated washing of the apparatuses of the plant.

Further object of the present invention is to provide a plant for maturing alcoholic beverages, which is simple and inexpensive to attain.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:

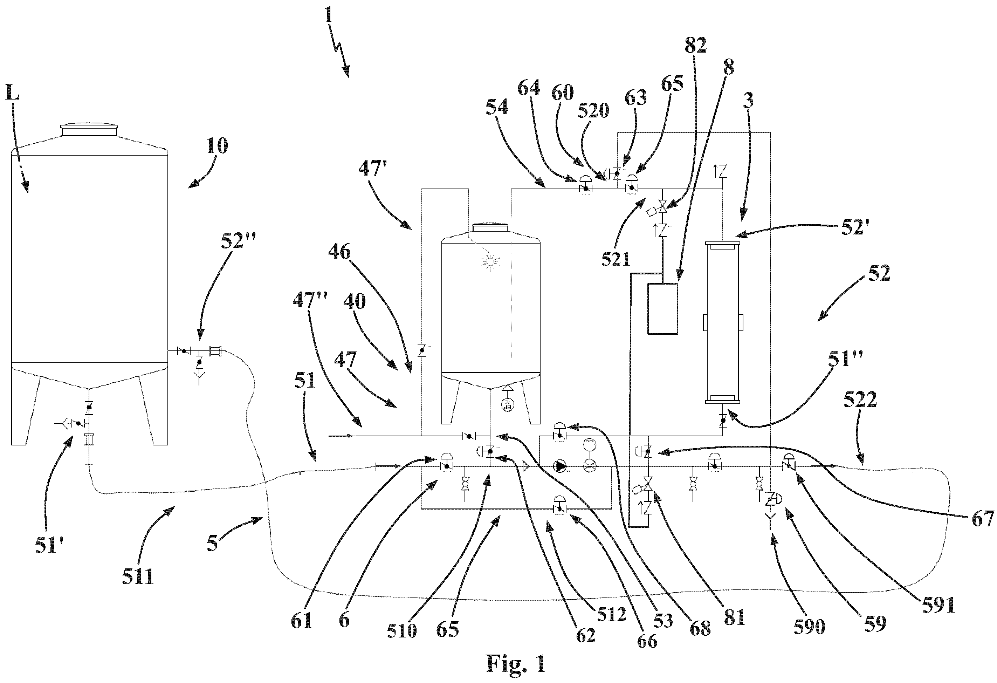

- figure 1 shows a schematic view of the plant for maturing a fermented liquid, object of the present invention;

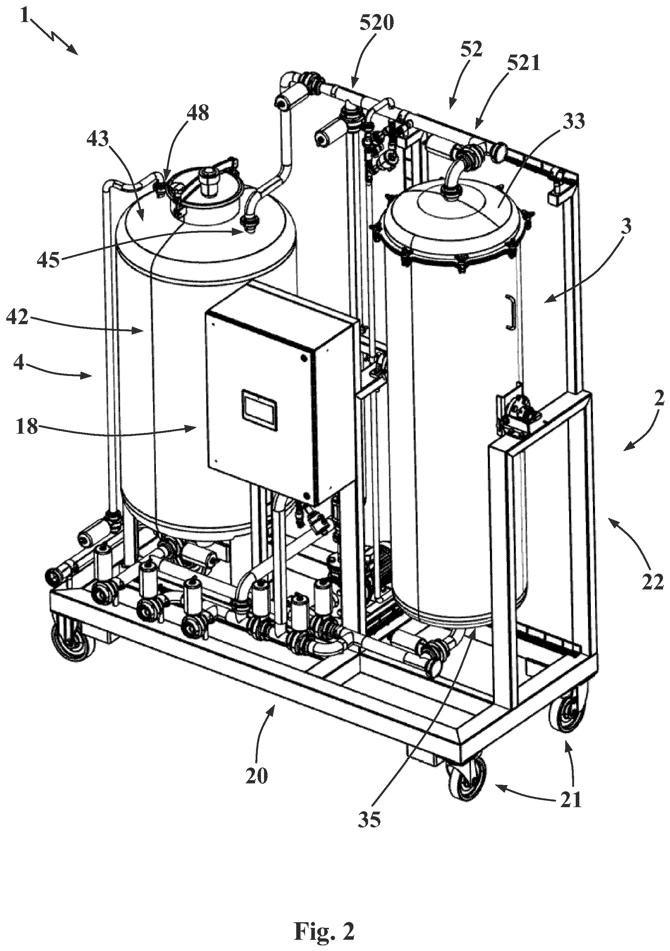

- figure 2 shows a front perspective of the plant of figure 1;

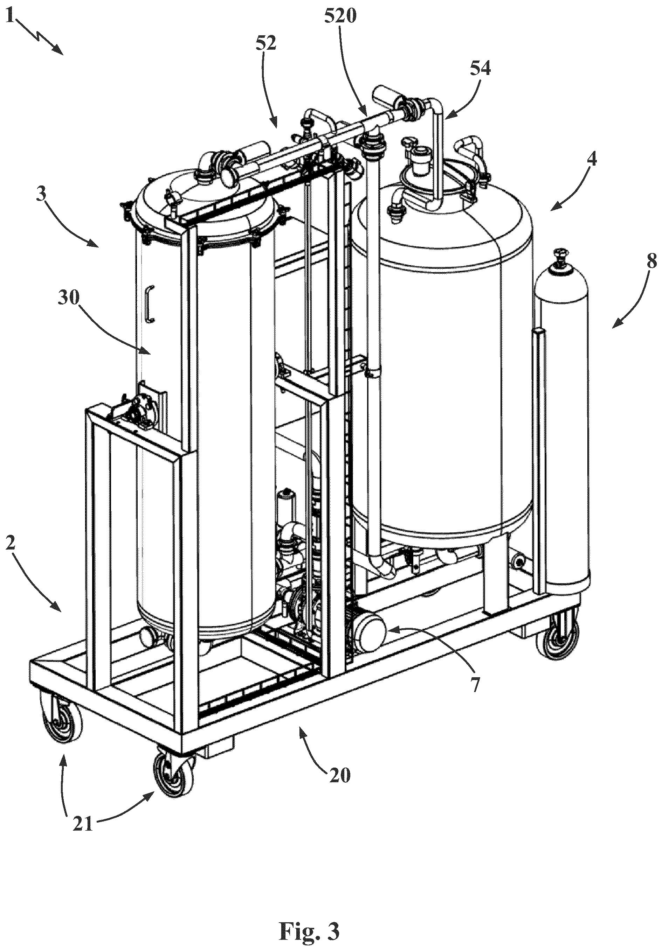

- figure 3 shows a rear perspective view of the plant of figure 1;

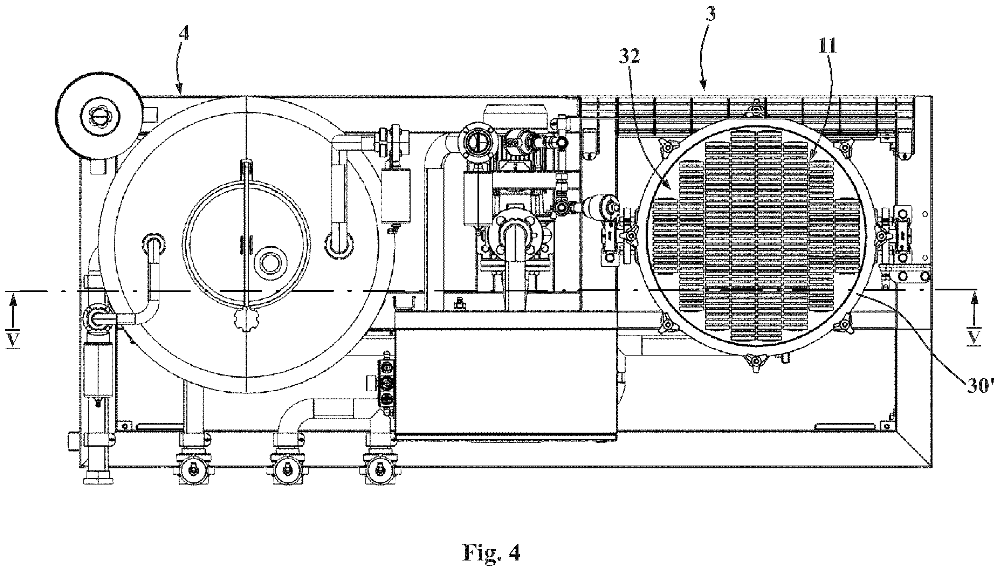

- figure 4 shows a top plan view of the plant of figure 1 with several parts removed in order to better illustrate other parts;

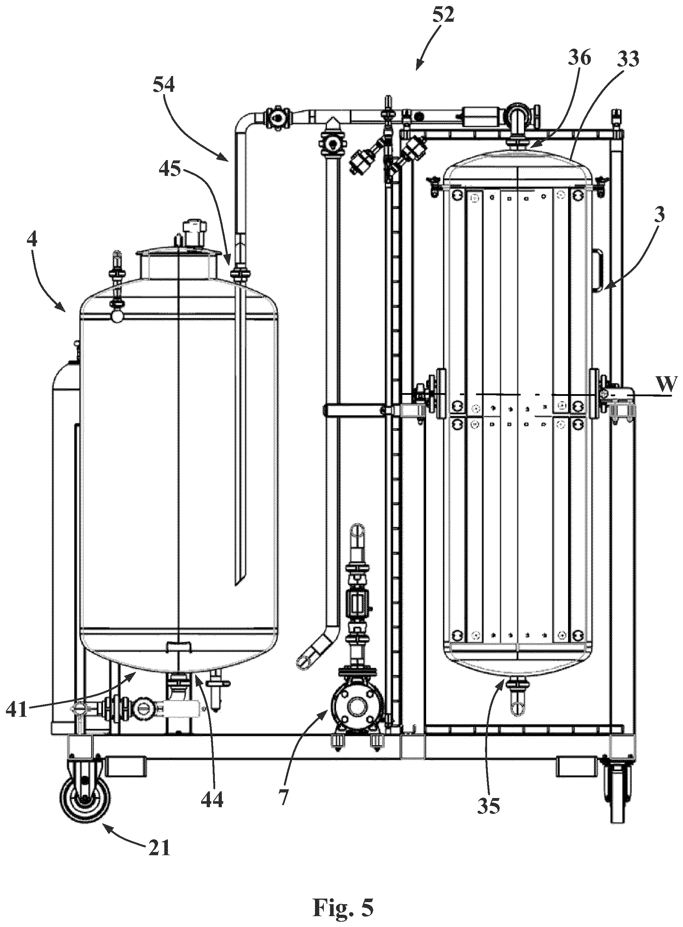

- figure 5 shows a front section view of the plant of figure 1 according to trace V-V of figure 4;

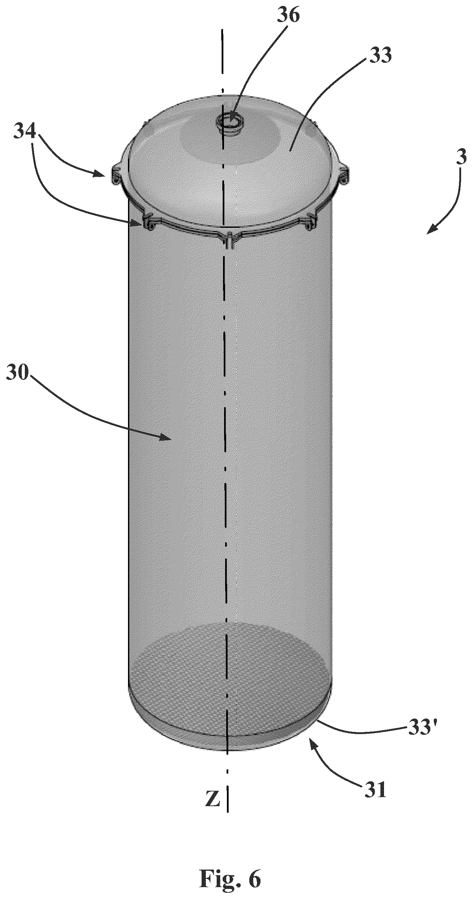

- figure 6 shows a detail of the plant of figure 1 relative to a maturation tank;
- figure 7 shows a perspective view of a centering template of the plant of figure 1;
- figure 8 shows a front view of the centering template of figure 7;
- figure 9 shows an embodiment variant of the plant of figure 1 comprising three maturation tanks.

### Detailed description of a preferred embodiment

With reference to the enclosed drawings, reference number 1 indicates a plant for maturing a fermented liquid L according to the invention.

In particular, the fermented liquid L is advantageously a fermented enological liquid, which has already reached the desired alcohol content and is therefore intended to become wine.

Otherwise, without departing from the protective scope of the present invention, the fermented liquid L is intended for producing a spirit, e.g. a grappa.

Advantageously, the plant 1 according to the invention is adapted to be installed in a facility for producing wine, e.g. a winery.

The plant 1 comprises a support structure 2, advantageously intended to be abutted against the ground, which is preferably at least partially made of metal material, e.g. steel.

Preferably, the support structure 2 is provided with a support frame 20, which is placed parallel to the ground.

Advantageously, the support structure 2 is provided with a plurality of wheels 21, which are mounted on the perimeter on the support frame 20, below the latter and directed towards the ground, being intended to be abutted against it, in order to be able to easily transport the plant 1 within the facility in which it is installed.

The plant 1 also comprises a maturation tank 3, which is mounted on the support structure 2 and is intended to contain a plurality of aromatizing products 11, in particular wood-based products such as for example wood chips (also known as chips), wood planks (also known as slats), etc.

The nature and the characteristics of the wood in which the aromatizing products are made is advantageously selected based on the organoleptic properties which one intends to confer to the wine and is not limiting of the protective scope of the present invention.

In particular, such aromatizing products 11 are intended to be hit by the fermented liquid L in order to transfer, to the latter, the substances which allow the latter to develop the desired aromas and flavors, e.g. tannins, and in this manner obtain a wine provided with greater aromatic and/or organoleptic complexity with respect to the starting fermented liquid L.

The plant 1 also comprises a washing tank 4, which is mounted on the support structure 2 and is intended to contain at least one washing fluid. In particular, the washing fluid is a washing liquid, advantageously water, which can be admixed with suitable chemical products adapted for cleaning the maturation tank 3. The plant 1 also comprises a connection circuit 5, which hydraulically connects the maturation tank 3 and the washing tank 4.

In accordance with the idea underlying the present invention, the connection circuit 5 comprises a delivery line 51, which is extended between a first end 51', intended to be connected to a containment tank 10 containing the fermented liquid L, and an opposite second end 51", hydraulically connected to the maturation tank 3.

The connection circuit 5 also comprises a return line 52, which is extended between a first termination 52', hydraulically connected to the maturation tank 3, and an opposite second termination 52", intended to be connected to the same containment tank 10 of the fermented liquid L.

The connection circuit 5 also comprises a introduction line 53, which is hydraulically connected to the washing tank 4 and to the delivery line 51, at a first branch point 510, for the introduction of the washing fluid from the washing tank 4 to the maturation tank 3.

Advantageously, the delivery line 51 comprises a first delivery section 511, which is extended between the first end 51' and the first branch point 510, and a second delivery section 512, which is extended between the first branch point 510 and the second end 51".

The plant 1 also comprises a re-entry line 54, which is hydraulically connected to the washing tank 4 and to the return line 52, at a second branch point 520, for the re-entry of the washing fluid from the maturation tank 3 to the washing tank 4.

Advantageously, the return line 52 comprises a first return section 521, which is extended between the first termination 52' and the second branch point 520, and a second return section 522, which is extended between the second branch point 520 and the second termination 52".

The plant 1 also comprises a first valve group 6, which is placed to intercept the connection circuit 5, at the first branch point 510 and is actuatable for selectively adjusting the flow to the maturation tank 3 of the fermented liquid L, from the containment tank 10, or of the washing fluid from the washing tank 4. More in detail, the first valve group 6 is configured for enabling the flow of the fermented liquid L or of the washing fluid towards the maturation tank 3.

The plant 1 also comprises a second valve group 60, which is placed to intercept the connection circuit 5, at the second branch point 520, and is actuatable for selectively adjusting the flow from the maturation tank 3 of the fermented liquid L, to the containment tank 10, or of the washing fluid, to the washing tank 4.

In particular, the second delivery section 512 of the delivery line 51 defines a first common section of the connection circuit 5, which is susceptible of being traversed both by the fermented liquid L and by the washing fluid, preferably not simultaneously, in order to be introduced into the maturation tank 3. Advantageously, the first return section 521 of the return line 52 defines a second common section of the connection circuit 5, which is susceptible of being traversed both by the fermented liquid L and by the washing fluid, preferably not simultaneously, in order to flow from the maturation tank 3 respectively to the containment tank 10 or to the washing tank 4.

The plant 1 also comprises pumping means 7, which are placed to intercept the connection circuit 5, at the delivery line 51, downstream of the first branch point 510, or at the return line 52, upstream of the second branch point 520.

The pumping means 7 are arranged for forcing the circulation of the fermented liquid L and/or of the washing fluid along the connection circuit 5.

In other words, the pumping means 7 are placed at one of the two common sections of the connection circuit 5, respectively defined by the second delivery section 512 of the delivery line 51 and by the first return section 521 of the return line 52.

Advantageously, the connection circuit 5 defines a closed circuit, in which the fermented liquid L can recirculate. More in detail, the fermented liquid L is recirculated along the connection circuit 5 from the containment tank 10 to the maturation tank 3, in order to once again return into the containment tank 10. In this manner, the plant 1 allows the maturation of the fermented liquid L through a continuous flow of the fermented liquid L between the containment tank 10, in which the fermented liquid L is initially contained, and the maturation tank 3 in which the aromatizing products 11 are contained for maturing the aforesaid fermented liquid L.

Advantageously, the connection circuit 5 also defines a closed circuit, in which the washing fluid can recirculate from the washing tank 4 to the maturation tank 3, in order to once again return into the washing tank 4.

In particular, in operation, during the maturation of the fermented liquid L, the first valve group 6 is actuated for allowing the flow of the fermented liquid L from the containment tank 10 to the maturation tank 3 through the delivery line 51 and the second valve group 60 is actuated for allowing the flow of the fermented liquid L from the maturation tank 3 once again to the containment tank 10 through the return line 52.

When the maturation of the fermented liquid L is terminated, the first valve group 6 is actuated for allowing the introduction of the washing fluid from the washing tank 4 to the maturation tank 3 through the introduction line 53 and the delivery line 51 and the second valve group 60 is actuated for allowing the flow of the washing fluid from the maturation tank 3 once again to the washing tank 4 through the return line 52 and the re-entry line 54.

More in detail, the maturation of the fermented liquid L terminates when the fermented liquid L has absorbed, from the aromatizing products 11 contained in the maturation tank 3, the substances necessary for reaching the desired aromatic and/or organoleptic properties.

This occurs after a variable pre-established time, which depends on the operating conditions and on the final result that one wishes to obtain, and which due to the particular configuration of the plant 1 is less than 7 days.

In particular, the aforesaid pre-established maturation time, i.e. the recirculation time of the fermented liquid L in the maturation tank 3, is calculated by calculated by a logic control unit 18, described in the detail hereinbelow, based on parameters such as, for example, the number of recirculations carried out by the fermented liquid L in the maturation tank 3, and/or the flow rate of the pumping means 7, and/or the temperature of the fermented liquid L itself.

Advantageously, the plant 1 can be easily moved within the facility through the aforesaid wheels 21 in order to be placed in proximity to a containment tank 10 containing the fermented liquid L to be matured within the maturation tank 3 of the plant 1 and, subsequent to its maturation, it can be moved in proximity to a different containment tank 10 with a different fermented liquid L to be matured.

In accordance with the preferred embodiment, the second delivery section 512 and the first return section 521 each comprise a rigid duct, for example made of metal material, e.g. of steel, which is advantageously mounted on the support structure 2.

Preferably, the first delivery section 511 and the second return section 522 each comprise a flexible pipe, in order to be easily connected to the ducts respectively of the second delivery section 512 and of the first return section 521.

Advantageously, the introduction line 53 and the re-entry line 54 each comprise a rigid pipe, for example made of metal material, which is advantageously mounted on the support structure 2.

In particular, the rigid pipe of the introduction line 53 and the rigid duct of the second delivery section 512 are made in a single body, in order to be easily mounted on the support structure 2.

More in detail, the rigid pipe of the re-entry line 54 and the rigid duct of the first return section 521 are made in a single body, in order to be easily mounted on the support structure 2.

Advantageously, the containment tank 10 is situated within the same facility in which the present plant 1 is installed so to be easily connectable to the maturation tank 3, and in particular to the second delivery section 512 and to the first return section 521 respectively through the first delivery section 511 and the second return section 522.

Advantageously, the hydraulic connection between the containment tank 10 and the maturation tank 3 occurs by connecting the first delivery section 511 to the second delivery section 512 and the second return section 522 to the first return section 521, and the first end 51' of the delivery line 51 and the second termination 52" of the return line 52 to the containment tank 10. In this manner, one obtains a plant 1 in which it is easy to connect and detach the first and the second delivery section 511, 512 and connect and detach the first and the second return section 521, 522.

For such purpose, the second delivery section 512 of the delivery line 51 and the first return section 521 of the return line 52 are advantageously provided, at least respectively at the first and second branch point 510, 520, with a quick coupling connector, in order to allow an easy connection and disconnection between the ducts of the second delivery section 512 and of the first return section 521 with the flexible pipes respectively of the first delivery section 511 and of the second return section 522.

Advantageously, the containment tank 10 has a substantially cylindrical form and is provided with a containment wall defining a containment volume within which the fermented liquid L is contained.

In particular, the containment tank 10 is provided with a delivery mouth, which is intended to be connected to the first end 51' of the first delivery section 511 (and specifically to its flexible pipe) for the delivery of the fermented liquid L to the maturation tank 3.

For example, the delivery mouth is made at a base portion of the containment wall, placed at a lower end of the containment wall itself.

Advantageously, the containment tank 10 is provided with a return mouth, which is intended to be connected to the second termination 52" of the second return section 522 (and specifically to its flexible pipe) for the return of the fermented liquid L from the maturation tank 3.

For example, the return mouth is made at a lateral portion of the containment wall, in order to allow an easy connection with the flexible pipe of the second return section 522 of the return line 52.

Otherwise, without departing from the protective scope of the present invention, the return mouth can be made at an upper portion of the containment wall, for example in the case of an enological fermented liquid L in order to also carry out an operation of pumping over of the wine.

Advantageously, the maturation tank 3 has a substantially cylindrical form, extended along a substantially vertical main direction Z.

In particular, the maturation tank 3 is provided with a lateral wall 30, delimited on the lower part by a bottom wall 31, preferably made of a single body with the lateral wall 30, and with an upper access opening 32 delimited on the perimeter by an upper edge 30' of the lateral wall 30.

More in detail, the maturation tank 3 is provided with a cover 33 placed to cover the access opening 32 and provided with a lower edge 33' facing the upper edge 30' of the lateral wall 30.

Advantageously, the cover 33 delimits, with the lateral wall 30 and the bottom wall 31, a maturation volume intended to contain the aromatizing products 11.

Preferably, the lateral wall 30 is provided with a plurality of coupling flanges 34 placed at the upper edge 30' and projecting from the lateral wall 30 itself outside the maturation volume. For example, in accordance with the illustrated preferred embodiment, the lateral wall 30 is provided with eight coupling flanges 34.

Advantageously, the cover 33 is provided with abutment elements placed at the lower edge 33' and facing respective coupling flanges 34.

More in detail, each coupling flange 34 carries, mounted thereon, a coupling pin, preferably threaded and placed substantially parallel to the main direction Z, on which a threaded knob is screwed which allows maintaining the cover 33 coupled to the lateral wall 30, abutting against the abutment element. Otherwise, without departing from the protective scope of the present invention, the cover 33 is made in shutter form, per se known to the man skilled in the art and therefore not described hereinbelow. Preferably, the cover 33, and advantageously also the bottom wall 31, have a convex torispherical form. Advantageously, the maturation tank 3 is provided with an inlet mouth 35, made for example on the bottom wall 31 and intended to be connected to the second end 51" of the delivery line 51 in order to receive the fermented liquid L or the washing fluid from the latter respectively coming from the containment tank 10 or from the washing tank 4, introducing them into the maturation volume. Advantageously, the maturation tank 3 is provided with an outlet mouth 36, made for example on the cover 33 and intended to be connected to the first termination 52' of the return line 52 in order to allow the exit of the fermented liquid L or of the washing fluid from the maturation tank 3 towards the return line 52 in order to return respectively to the containment tank 10 or to the washing tank 4.

In this manner, the fermented liquid L flows into the maturation volume of the maturation tank 3 from the inlet mouth 35 to the outlet mouth 36, i.e. from bottom to top, with the aromatizing products 11 placed in the maturation volume itself between the inlet mouth 35 and the inlet mouth 36 in order to intercept the fermented liquid L, exchanging with the latter the substances which allow it to acquire the desired aromatic and/or organoleptic properties.

Advantageously, the washing tank 4 has a substantially cylindrical form and is provided with a base wall 41 and with a lateral wall 42, which projects upward from the base wall 41 and delimits a washing volume in which the washing fluid is intended to be contained. In particular, the washing tank 4 is also provided with an upper wall 43, which is placed as an upper closure of the washing volume. Advantageously, the washing tank 4 is provided with an introduction mouth 44, which is in particular made on the base wall 41 and is connected to the rigid pipe of the introduction line 53 in order to introduce the washing fluid into the maturation tank 3.

Advantageously, the washing tank 4 is provided with a re-entry mouth 45, which is in particular made on the upper wall 43 and is connected to the rigid pipe of the re-entry line 54 for the re-entry of the washing fluid from the maturation tank into the washing tank 4 itself.

Advantageously, the first valve group 6 is provided with at least one first valve 61 and with a second valve 62, which are placed to intercept the connection circuit 5, upstream of the maturation tank 3, and are actuatable for selectively adjusting the flow to the maturation tank 3 of the fermented liquid L or of the washing fluid.

More in detail, the first valve 61 is placed to intercept the first delivery section 511 in order to allow or prevent the flow of the fermented liquid L to the maturation tank 3.

Advantageously, the second valve 62 is placed to intercept the delivery line 51 in proximity to its connection with the introduction line 53 in order to allow or prevent the flow of the washing fluid to the maturation tank 3.

In particular, the first and the second valve 61, 62 are respectively actuatable between at least one first open position and a first closed position and between at least one second open position and a second closed position, in order to allow or prevent the flow of the washing fluid or of the fermented liquid L to the maturation tank 3.

Otherwise, without departing from the protective scope of the present invention, the first valve group 6 can comprise a three-way valve, placed at the first branch point 510, and actuatable for selectively enabling the flow of the fermented liquid L or of the washing fluid (respectively from the first delivery section 511 and the introduction line 53) into the second delivery section 512.

Advantageously, the second valve group 60 is provided with at least one third valve 63 and with a fourth valve 64, which are placed to intercept the connection circuit 5, downstream of the maturation tank 3, and are actuatable for selectively adjusting the flow from the maturation tank 3 of the fermented liquid L to the containment tank 10 or of the washing fluid to the washing tank 4.

More in detail, the third valve 63 is placed to intercept the second return section 522 in order to selectively adjust the return of the fermented liquid L or of the washing fluid to the containment tank 10. Advantageously, the fourth valve 64 is placed to intercept the return line 52 in proximity to its connection with the re-entry line 54 in order to selectively adjust the flow of the fermented liquid L or of the washing fluid to the washing tank 4.

In particular, the third and the fourth valve 63, 64 are actuatable respectively between at least one third open position and a third closed position and between at least one fourth open position and a fourth closed position, in order to selectively adjust the flow of the washing fluid or of the fermented liquid L to the maturation tank 3.

Otherwise, without departing from the protective scope of the present invention, the second valve group 60 can comprise a three-way valve, placed at the second branch point 520, and actuatable for selectively enabling the flow of the fermented liquid L or of the washing fluid from the first return section 521, respectively to the second return section 522 and to the re-entry line 54.

Advantageously, the plant 1 comprises a fifth valve 69, which is placed to intercept the first return section 521 of the return line 52, at the second branch point 520 and preferably upstream of the latter, in order to adjust the flow of the fermented liquid L or of the washing fluid towards the containment tank 10 or the washing tank 4.

Preferably, the aforesaid valves 61-64 are butter valves. More in detail, the aforesaid valves comprise respective actuator means, per se known, which are configured for actuating the latter respectively between the respective open and closed positions.

In accordance with the preferred embodiment, the actuator means comprise a pneumatic actuator. Otherwise, without departing from the protective scope of the present invention, the actuator means comprise an electric actuator.

Advantageously, the plant 1 comprises water supply means 40, which are provided with at least one fill line 46, which comprises at least one fill duct 47 hydraulically connected to the washing tank 4 in order to introduce at least water into the washing tank 4.

In accordance with the preferred embodiment illustrated in the enclosed figures, the fill line 41 comprises an upper fill duct 47' and a lower fill duct 47".

In particular, the upper fill duct 47' is configured for introducing water into the washing tank 4 at the upper wall 43. For such purpose, on such upper wall, a suitable fill mouth 48 is made.

More in detail, the upper fill duct 47' is connected, at one end thereof which is preferably inserted into the washing volume, to a washing sphere, which allows filling the aforesaid washing volume with water and simultaneously washing the internal surfaces (directed towards the washing volume) of the lateral wall 42 of the washing tank 4 of possible resins of fermented liquid L.

Advantageously, the lower fill duct 47" is configured for introducing water into the washing tank 4 at the base wall 41, more precisely through the introduction mouth 44.

More in detail, the lower fill duct 47" at least partially coincides with the rigid pipe of the introduction line 53.

In this manner, it is possible to optimize the spaces of the plant 1 and the components necessary for the attainment thereof, obtaining a plant 1 that is compact and inexpensive to attain.

Preferably, the water supply means 40 comprise two valves, each of which placed to intercept the corresponding upper and lower fill duct 47', 47", in order to adjust the flow of water to the washing tank 4.

Advantageously, the water supply means 40 are arranged for picking up water from a water tank, or from a water supply system, and for introducing it into the washing tank 4.

In particular, the valve of the lower fill duct 47" is placed in proximity to the first branch point 510.

Advantageously, the washing tank 4 is provided with a level sensor, which is configured for detecting a measurement relative to a quantity of washing fluid present within the washing tank 4 itself. In particular, such level sensor is configured for sending a signal corresponding to the detected measurement to a logic control unit 18, described in detail hereinbelow.

Advantageously, the plant 1 comprises an inertization tank 8, which is intended to contain an inert fluid, preferably nitrogen, and is placed in fluid connection with the delivery line 51, downstream of the first branch point 510 (in the delivery sense of the fermented liquid L from the containment tank 10 towards the maturation tank 3), in particular at the second delivery section 512, in order to inject the inert fluid at least into the connection circuit 5. For example, the inertization tank 8 can comprise a tank containing nitrogen or, otherwise, a nitrogen generator.

In particular, the inertization tank 8 is placed branched with respect to the delivery line 51. Preferably, the plant 1 comprises a first actuation valve 81 interposed between the inertization tank 8 and the delivery line 51 in order to enable the injection of the inert fluid into the connection circuit 5.

Advantageously, the inertization tank 8 is placed in fluid connection with the return line 52, upstream of the second branch point 520 (in the return sense of the fermented liquid L from the maturation tank 3 towards the containment tank 10), in particular at the first return section 521, in order to inject the inert fluid into the connection circuit 5. In particular, the inertization tank 8 is placed branched with respect to the return line 52.

Preferably, the plant 1 comprises a second actuation valve 82 interposed between the inertization tank 8 and the return line 52 in order to enable the injection of the inert fluid into the connection circuit 5.

In this manner, with the inertization tank 8 placed in fluid connection both with the delivery line 51 and with the return line 52, it is advantageously possible to inject the inert fluid into the connection circuit 5, enabling the respective first or second actuation valve 81, 82.

Otherwise, it is also possible to provide that the inertization tank 8 be placed in fluid connection only with the return line 52 of the connection circuit 5.

Additionally, without departing from the protective scope of the present invention, the plant 1 can comprise two separate inertization tanks 8, each of which arranged for containing a respective inert fluid. In particular, in such configuration, one of the two inertization tanks 8 is placed in fluid communication with the delivery line 51 by means of the first actuation valve 81 and the other of the two inertization tanks 8 is placed in fluid communication with the return line 52 by means of the second actuation valve 82.

Advantageously, the maturation tank 3 is rotatably connected to the support structure 2 and is rotatable between an operative position, substantially vertical, and a fill position, in which it is placed tilted in order to facilitate operations of filling and/or emptying of the maturation tank 3, in particular in order to allow an easy filling and/or emptying of the aromatizing products 11.

In particular, the support structure 2 is provided with two support arms 22, projecting from the support frame 20 parallel to the main direction Z of the maturation tank 3 and shaped substantially as an overturned "U".

More in detail, the maturation tank 3 is hinged to the aforesaid support arms 22 by means of a hinge element comprising a rotation shaft rotatably mounted on the support arms 22, susceptible of being brought in rotation around a rotation axis W and fixed to the lateral wall 30, in order to bring the maturation tank 3 itself in rotation around the rotation axis W.

The maturation tank 3 can be rotated manually by an operator, or be provided with a motorized actuation, which allows rotating the maintenance tank 3 without the aid of an operator.

Advantageously, the maturation tank 3 is provided with a safety device which allows preventing the rotation thereof during operation, for example comprising a slotted flange mounted on the rotation shaft and integral with the latter, and a safety pin susceptible of being engaged with grooves of the aforesaid slotted flange.

In operation, when an operator must load the aromatizing products 11, he removes the safety pin in order to disengage it from the slotted flange and rotates the maturation tank so as to bring the access opening 32 to a height lower than that of normal operation.

For example, the maturation tank can be placed with the main direction Z substantially horizontal, with the access opening 32 placed substantially at the same height as the bottom wall 31.

Subsequently, advantageously, the operator removes the threaded knobs in order to at least partially release the cover 33 and access the maturation volume from the access opening 32.

Advantageously, the cover 33 is not completely removable by an operator, for example, it is hinged to the lateral wall 30, more precisely at the upper edge 30'.

Once the aromatizing products 11 have been arranged in the maturation volume, the operator can once again couple the cover 33 to the lateral wall 30 by screwing the threaded knobs, once again bringing the maturation tank 3 with the main direction Z vertically aligned and then inserting the safety pin in a groove of the slotted flange in order to block the rotation thereof.

Advantageously, the maturation tank 3 is configured for housing, in the maturation volume, aromatizing products 11 both in the form of chips and in the form of aromatizing slats 13.

Preferably, the maturation tank 3 is provided with at least one first diffusion grill, for example made of metal material, which is placed in the maturation volume at the bottom wall 31.

Preferably, the maturation tank 3 is provided with a support frame, with circular form and substantially X shaped, which is configured for supporting the first diffusion grill.

Advantageously, the first diffusion grill facilitates the uniform distribution of the flow of fermented liquid L or of washing fluid entering from the inlet mouth 35 within the maturation volume.

Preferably, the maturation tank 3 also comprises a second diffusion grill, substantially equal to the first diffusion grill, which is placed in the maturation volume at the access opening 32, below the cover 33.

Advantageously, the first and the second diffusion grill reduce the risk of propagation of foreign bodies (e.g. deriving from the aromatizing products 11) in the fermented liquid L outside the maturation volume. Advantageously, the aromatizing products 11 are in the form of aromatizing slats 13, and the plant 1 comprises at least one positioning device 12 on which the aforesaid aromatizing slats 13 are intended to be mounted.

Preferably, the plant 1 comprises a plurality of positioning devices 12, which are removably inserted in the maturation tank 3.

In particular, the positioning device 12 comprises at least two guide rods 14, each of which engageable in corresponding through holes 130 made on the aromatizing slats 13.

Advantageously, the positioning device 12 also comprises multiple spacer elements 17 slidably engageable in the guide rods 14.

In particular, each spacer element 17 is intended to be interposed between two adjacent aromatizing slats 13.

More in detail, the spacer elements 17 have an annular form and a thickness such to ensure that two adjacent aromatizing slats 13 are not in abutment on each other.

In this manner, the fermented liquid L flows through the interspaces between two adjacent aromatizing slats 13 ensured by the spacer elements 14 and is thus able to hit a greater surface area of the aromatizing slats 13 themselves, rendering the maturation process quick and efficient.

Advantageously, the aromatizing slats 13 are stackable in the guide rods 14 to form a stack of adjacent aromatizing slats 13, between which the spacer elements 17 are placed.

More in detail, the positioning device 12 comprises multiple fixing elements, adapted to fix the guide rods 14 to the last aromatizing slats 13 or to the last spacer elements 17 of the obtained stack, such that the latter cannot exit outward during the positioning in the maturation volume or during the operation of the plant 1.

Advantageously, at least part of the positioning devices 12 is intended to be placed, during use, abutted against the first diffusion grill.

In accordance with the preferred embodiment, the maturation tank 3 is configured for containing, in the maturation volume, the positioning devices 12 comprising the aromatizing slats 13 on two levels.

In particular, a lower level in which the positioning devices 12 are abutted against the first diffusion grill, and an upper level in which the positioning devices 12 are abutted against the positioning devices 12 of the lower level.

In this manner, the aromatizing slats 13 are placed in the maturation volume of the maturation tank 3 without having to install frame, which would otherwise be difficult to wash.

Otherwise, in the event in which the aromatizing products 11 are in the form of chips, the latter are placed within the maturation volume, coming to be abutted against the first diffusion grill, then being transported under suspension within the maturation volume by the flow of the fermented liquid L coming from the inlet mouth 35.

Therefore, as described above, the maturation tank 3 is advantageously configured for housing aromatizing products 11 both in the form of chips and in the form of aromatizing slats 13.

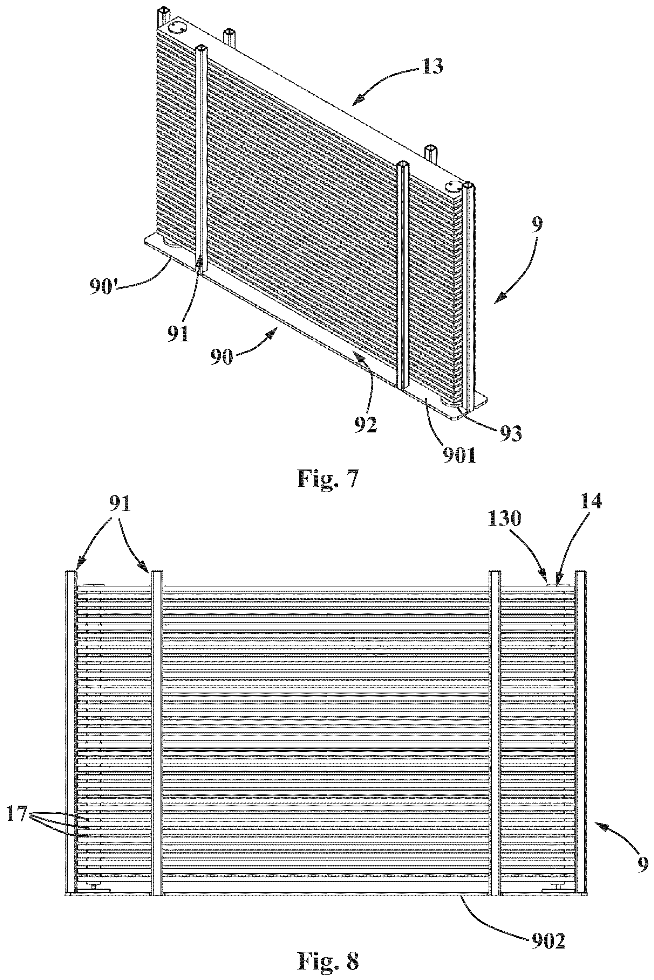

Advantageously, the plant 1 comprises a centering template 9, illustrated for example in figures 7-8, which comprises a base plate 90 and multiple retention elements 91 which project from a perimeter edge 90' of the base plate 90 and between them delimit a housing seat 92 of the aromatizing slats 13, configured to facilitate the mounting of the positioning device 12.

In particular, the base plate 90 comprises a first face 901 intended to be directed towards the positioning device 12, and an opposite second face 902.

More in detail, the retention elements 91 are substantially rod-like and are extended projecting from the first face 901, substantially orthogonal to the latter.

Advantageously, the centering template 9 also comprises two engagement elements 93, each of which fixed to the first face 901 of the base plate 90 and configured for being removably engaged with a corresponding fixing element of the positioning device 12., so as to retain the guide rods 14 while the aromatizing slats 13 interspaced by the spacer elements 17.

Advantageously, the plant 1 comprises a logic control unit 18, which is connected at least to the first and to the second valve group 6, 60 in order to command the actuator means to actuate the relative valves 61-64 between the corresponding open and closed positions.

In particular, the aforesaid actuation of the valves can be set by an operator through an interface of the logic unit 18, or can be automated.

In the latter case, the plant 1 can be provided with one or more optical sensors, placed for example inside the maturation tank 3 and/or the containment tank 10, in order to measure a quantity relative to the level of maturation of the fermented liquid L, e.g. the quantity of tannins present in the latter.

More in detail, such optical sensor is connected to the logic control unit 18 and is configured for sending, to the latter, a signal correlated with the detected measurement.

Preferably, the logic control unit 18 is configured for determining, based on the signal received by the optical sensor, if the fermented liquid L must continue with the maturation process or if the maturation process has reached completion.

In the latter case, the logic control unit 18 commands the first and third valve 61, 63 to respectively actuate into the first and third closed position in order to interrupt the flow of fermented liquid L into the fermentation tank 3.

Preferably, the logic control unit 18 is connected to the level sensor in order to receive a signal relative to the measurement of the quantity of washing fluid present in the washing tank 4.

In particular, when the aforesaid measurement exceeds a specific threshold value, the logic control unit 18 is configured for commanding the closure of the valves placed to intercept the upper and lower fill ducts 47', 47".

Of course, the logic control unit 18 is advantageously configured for detecting, following the reception of the signal, the opening of the aforesaid valves in the event in which the washing fluid in the washing volume is lower than a specific threshold detected by the level sensor.

Advantageously, the logic control unit is connected to the first and second actuation valves 81, 82, in order to command the latter into respective open or closed positions in order to allow the injection of the inertizing fluid into the connection circuit 5, in particular respectively at the delivery line 51 and return line 52.

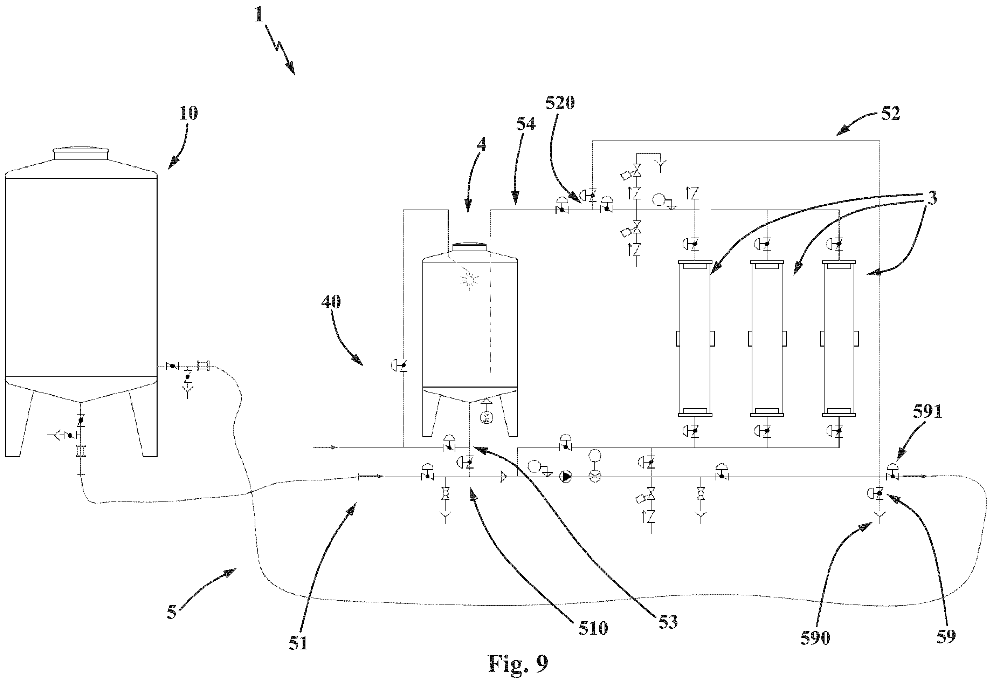

In accordance with an embodiment variant of the present plant 1 illustrated for example in figure 9, the latter is provided with multiple maturation tanks 3, which are advantageously mounted on the same support structure 2 and are placed in parallel from each other with respect to the containment tank 10 and washing tank 4.

For example, in accordance with the embodiment variant illustrated in figure 9, the plant 1 is provided with three maturation tanks 3.

In such embodiment, during the operation of the plant 1, only one of the three maturation tanks 3 is traversed by the fermented liquid L for maturing the latter, with the other two maturation tanks 3 that are advantageously filled with the respective aromatizing products 11, so as to speed up the preparation operations between the maturation process underway and the subsequent process for maturing a different fermented liquid L contained in a different containment tank 10, once the maturation process underway has been completed.

Therefore, for the process for maturing a subsequent fermented liquid L, the latter is made to flow into a different maturation tank 3 with respect to the maturation tank 3, into which the fermented liquid of the preceding maturation process has flowed.

Otherwise, without departing from the protective scope of the present invention, the maturation tanks 3 can work in parallel.

Also forming the object of the present invention is a process for maturing a fermented liquid L through a plant 1 for maturing a fermented liquid of the above-described type, regarding which the same reference numbers are maintained for the sake of description simplicity.

The present process comprises a step of arranging a containment tank 10 for containing a fermented liquid L.

Advantageously, in the event in which the support structure 2 of the plant 1 is provided with wheels 21, it is advantageously moved within the facility where the plant 1 itself is installed, in order to be placed in proximity to the containment tank 10.

The present process also comprises a connection step, in which the containment tank 10 is connected to the connection circuit 5.

In particular, in such connection step, the first delivery section 511 and the second delivery section 512 are connected to each other in order to form the delivery line 51 of the connection circuit 5 and the first return section 521 and the second return section 522 are connected to each other in order to form the return line 52 of the connection circuit 5.

The present process also comprises a loading step, in which the aromatizing products 11 are inserted in the maturation tank 3. Of course, such loading step can be carried out indiscriminately before or after the arrangement and the connection of the containment tank 10.

In particular, as described above, the operator removes the safety pin in order to disengage it from the slotted flange and brings the maturation tank 3 in rotation around the rotation axis W so as to bring the access opening 32 to a lower height than that of the normal operation.

More in detail, the maturation tank can be placed with the main direction Z substantially horizontal, with the access opening 32 placed substantially at the same height of the bottom wall 31.

Subsequently, the operator removes the threaded knobs in order to at least partially release the cover 33 and access the maturation volume from the access opening 32 and then load the aromatizing products 11 into the maturation tank 3.

Of course, the aforesaid operations can be automated, with a mechanical device arranged for automatically loading the aromatizing products 11 into the maturation tank 3.

The present process also comprises an actuation step, in which the first valve group 6 is actuated for allowing the flow of the fermented liquid L from the delivery line 51 to the maturation tank 3 and the second valve group 60 is actuated for allowing the return of the fermented liquid L from the maturation tank 3 to the containment tank 10 through the return line 52.

Of course, in the event in which the first and the second valve group 6, 60 are already positioned as described above, the actuation step can be considered completed and, therefore, can be omitted.

Advantageously, as described above, the actuation of the valve groups 6, 60 can be assigned to the logic control unit 18, based on the commands imparted by the operator or measurements detected by sensors (such as for example the optical sensor) and subsequently processed by the logic control unit 18 itself, or additionally based on preset control logics.

The present process also comprises at least one maturation step, in which the pumping means 7 are actuated for forcing the fermented liquid L to flow along the circulation circuit 5 and introduce the fermented liquid L into the maturation tank 3 in order to place the fermented liquid L in contact with the aromatizing products 11 and thus mature the fermented liquid L.

In particular, during the maturation step, the wood, with which the aromatizing products are advantageously attained, releases tannins to the fermented liquid L, which therefore is enriched with aromas and flavors.

The maturation step therefore comprises a continuous circulation of the fermented liquid L along the connection circuit 5, in order to allow the fermented liquid L to traverse the maturation tank 3 multiple times, thus speeding up the maturation step, which in accordance with the present invention has a duration preferably of less than seven days.

Advantageously, as described in detail hereinbelow, the present process provides for unloading the fermented liquid L present in the connection circuit 5 and in the maturation tank 3 once again into the containment volume of the containment tank 10 once the maturation step has terminated, so as to recover it.

The present process also comprises a switching step, in which the first valve group 6 is actuated for allowing the introduction of the washing fluid from the introduction line 51 to the maturation tank 3 and the second valve group 60 is actuated for allowing the re-entry of the washing fluid from the maturation tank 3 to the washing tank 4 through the re-entry line 54.

Advantageously, the switching of the valve groups 6, 60 can be commanded by the logic control unit 18 as in the above-described actuation step.

The present process also comprises a washing step, in which the pumping means 7 are actuated for forcing the washing fluid to circulate along the connection circuit 5.

Advantageously, during the washing step, the washing fluid is forced to circulate also in the maturation tank 3 in order to wash away possible residues of the fermented liquid L or of the aromatizing products 11.

In particular, the present process comprises a filling step, preceding the washing step, and advantageously also the switching step, in which the valves placed on the fill ducts 47', 47" are opened in order to allow the filling of the washing tank 4 at least with water.

In particular, during such filling step at least the second valve 62 is actuated into the second closed position.

Advantageously, as described above, the level sensor of the washing tank 4 is configured for measuring the quantity of water present in the washing tank 4 itself and sending a signal correlated with such measurement to the logic control unit 18, which, when it is detected that a specific threshold value has been exceeded, commands the closure of the aforesaid valves.

Preferably, the washing step comprises a substep of washing with water and a substep of washing with additives (in particular chemical additives).

Advantageously, the substep of washing with water is carried out before the substep of washing with additives.

In particular, during the substep of washing with water, the washing fluid is water, which is made to flow by the pumping means 7 from the washing tank 7 along the introduction line 53 and the second delivery section 512 of the delivery line 51, up to the maturation tank 3 (or to the maturation tanks 3 in the event in which the plant 1 comprises more than one maturation tank 3).

Advantageously, in such substep of washing with water, the third valve 63 is actuated into the third open position, and the fourth valve 64 is actuated into the fourth closed position, in order to allow the washing fluid to flow, exiting from the maturation tank 3, along the return line 52, for example up to the second branch point 520.

In particular, in such substep, the second return section 522 is disconnected from the first return section 521, and the washing fluid does not recirculate inside the connection circuit 5, being expelled outside the plant 1.

For such purpose, the plant 1 comprises an outlet valve 59 for opening or closing a corresponding outlet opening 590, preferably placed at the second return section 522 of the return line 52. Advantageously, the plant 1 comprises a passage valve 591, placed to intercept the return section 522, which is generally actuated into an open position in order to allow the fermented liquid L or the washing fluid or the inert fluid to flow from the maturation tank 3 towards the containment tank 10 or, in the event in which the outlet valve 59 is open in order to allow the washing fluid to exit through the outlet opening 590 without flowing to the containment tank 10.

More in detail, in the event in which the level of the washing fluid during such substep falls in the washing volume, the level sensor is configured for detecting when the quantity of washing liquid falls below a certain threshold value, in order to send a relative signal to the logic control unit 18, which commands the opening of at least one between the two valves of the fill duct 47 in order to allow newly filling the washing tank 4.

Optionally, the substep of washing with water comprises the rinsing of the flexible pipes of the first delivery section 511 and of the second return section 522. For such purpose, the first end 51' of the delivery line 51 and the second termination 52" of the return line 52 are disconnected from the containment tank 10 and suitably connected to each other. In such case, the washing fluid flows from the washing tank 4 partially into the delivery line 51 through the second valve 62 (open), passing through the pumping means 7 up to a bypass line 65 that connects the delivery line 51 to the return line 52 by means of a first bypass valve 66 (advantageously open), in which a delivery valve 67, interposed between the pumping means 7 and the maturation tank 3, is suitably closed in order to prevent the washing fluid from flowing to the maturation tank 3.

Advantageously, during the substep of washing with additives, the washing fluid is initially made to circulate from the washing tank 4 to the maturation tank 3 along the introduction line 53 (with the second valve 62 in the second open position) and then, exiting from the outlet mouth 36 of the maturation tank 3, it is made to exit from the first return section 521 through a vent opening with a corresponding vent valve. In particular, such vent valve is actuated into a corresponding open position in order to allow the exit of the washing fluid from the aforesaid vent opening.

Subsequently, the washing fluid is made to recirculate between the washing tank 4 and the maturation tank 3 along the introduction line 53, the second delivery section 512, the first return section 521 and the re-entry line 54, with the first and third valve 61, 63 actuated into the respective closed positions and the second and fourth valve 62, 64 actuated into the respective open positions.

Analogous to the substep of washing with water, also in the substep of washing with additives it is possible to wash the flexible pipes of the first delivery section 511 and of the second return section 522 by connecting them together and actuating the valves as described above for rinsing the flexible pipes during the substep of washing with water.

Advantageously, the present process comprises a rinsing step, subsequent to the washing step, and in particular to the substep of washing with additives, in which the washing liquid, preferably water, is made to circulate. Such rinsing step provides that the liquid circulates in a manner entirely analogous to the washing substep and, therefore, it will not be described in detail hereinbelow.

Advantageously, the present process comprises at least one first inertization step, preceding the aforesaid maturation step, in which the inert fluid flows from the inertization tank 8 along the connection circuit 5 from the delivery line 51 in order to remove oxygen from the connection circuit 5.

In particular, during the first inertization step, the first actuation valve 81 is actuated into the respective open position in order to allow the inert fluid (advantageously comprising nitrogen) to flow into the maturation tank 3 through the delivery line 51.

During such step, the first delivery section 511 and the second return section 522 are generally connected respectively by the second delivery section 512 and by the first return section 521, such that the inert fluid also flows into their flexible pipes in order to remove oxygen also from the latter. Advantageously, the containment tank 10 is provided with two connection valves respectively at the delivery mouth and at the outlet mouth, and with two respective escape valves for opening or closing a corresponding escape opening. In particular, during such first inertization step, the aforesaid connection valves are closed, with the escape valves open. In this manner, the inert fluid flows along the flexible pipes of the first delivery section 511 and of the second return section 522 without entering into the containment volume of the containment tank 10.

Otherwise, the flexible pipes of the first delivery section 511 and of the second return section 522 can be disconnected from the second delivery section 512 and from the first return section 521 in order to only inertize the latter, removing oxygen therefore. In this case, the first inertizing liquid exits from the first return section 521 at the second branch point 520 or at a suitable escape opening arranged on the first return section 521, and made accessible by means of the opening of an escape valve.

Advantageously, the present process comprises a filling step, subsequent to the first inertization step and preceding the maturation step, in which the pumping means 7 are actuated and the fermented liquid L is made to flow under the action of the latter from the containment tank 10 along the connection circuit 5 in order to fill the flexible pipes and the rigid ducts of the delivery line 51 and of the return line 52 and the maturation tank 3.

In particular, during such filling step, the fermented liquid L advances along the connection circuit 5, forcing the gas still present in the latter and in the maturation tank 3 to flow along the closed circuit defined by the connection circuit 5 and by the maturation tank 3 under the thrust of the fermented liquid L.

More in detail, in order to allow the fermented liquid L to fill the flexible pipes and the rigid ducts of the delivery line 51 and of the return line 52 and the maturation tank 3, the gas must be made to exit from the connection circuit 5, e.g. from the first return section 521 through the aforesaid vent opening by actuating the corresponding valve into the corresponding open position, or by leaving the second termination 52" of the second return section 522 disconnected from the return mouth of the containment tank 10.

In this manner, the gas can flow outside the connection circuit 5 and, when the fermented liquid L starts to exit from the aforesaid vent opening or from the second termination 52", the valve at the vent opening is closed (or the second termination 52" is connected to the containment tank 10) in order to allow the fermented liquid L to flow in a continuous manner from the fermentation tank 10 to the maturation tank 3 and vice versa during the maturation step.

Advantageously, the present process comprises at least one second inertization step, subsequent to the maturation step, in which the inert fluid flows from the inertization tank 8 along the connection circuit 5 from the return line 52 in order to at least partially remove the fermented liquid L from the connection circuit 5, and preferably also from the maturation tank 3.

In particular, during the second inertization step, the second actuation valve 82 is actuated into the respective open position in order to allow the inert fluid (advantageously comprising nitrogen) to flow into the maturation tank 3 through the return line 52.

Advantageously, during such step, the delivery valve 67 is actuated into a closed position, with a return valve 68 and the bypass valve 66 actuated into open position in order to allow a reversal of the flow with respect to the normal operation described for example during the maturation step.

More in detail, in such second inertization step, the inert fluid injected into the first return section 521 enters into the maturation tank 3 from the outlet mouth 36, forcing the fermented liquid L present therein to exit from the inlet mouth 35 towards the second delivery section 512 through the return valve 68 and then through the pumping means 7 and the second return section 522 through the bypass valve 66.

In this manner, the fermented liquid L is advantageously thrust under the action of the inert fluid, advantageously at a pressure comprised between 0.1 and 3 bar, preferably between 0.5 and 1 bar, up to the second termination 52" and then into the containment volume of the containment tank 10.

Therefore, such second inertization step allows recovering the fermented liquid L present in the connection circuit 5 and in the maturation tank 3, once this has terminated the maturation step.

Advantageously, the present process comprises a mounting step, in which the aromatizing slats 13 are mounted to form a compact structure to be inserted in the maturation tank 3, in order to allow facilitating the operations of loading and unloading of the maturation tank 3, and in order to optimize the exchange between the aromatizing products 11 and the fermented liquid L.

Advantageously, the mounting step provides for arranging the guide rods 14, inserting a first aromatizing slat 13 in the guide rods 14 through the corresponding through holes 130, inserting at least one spacer element 17 in a corresponding guide rod 14, or two spacer elements 17, each in the corresponding guide rod 14, and inserting a second aromatizing slat 13 in the guide rods 14 through the corresponding through holes 130 with the spacer element 17 interposed between the first and the second aromatizing slat 13. Preferably, the alternated insertion of an aromatizing slat 13 and two spacer elements 17 (one in each guide rod 14) is repeated until the stack of aromatizing slats 13 and spacer elements 17 reaches the same height as the guide rods 14.

In particular, during the arrangement of the guide rods 14, these are coupled to two corresponding fixing elements at two lower ends, in order to prevent the aromatizing slats 13 and the spacer elements 17 from sliding below the guide rods 14 themselves, and removing themselves from the latter.

More in detail, when the stack of aromatizing slats 13 and spacer elements 17 reaches the same height as the guide rods 14, e.g. it reaches the same height as two corresponding upper ends opposite the aforesaid lower ends, the guide rods 14 are coupled to two further fixing elements, one for each guide rod 14, at such upper ends.

In this manner, the positioning device 12 can be overturned in order to be placed in the maturation volume of the maturation tank 3 without the aromatizing slats 13 being removed from the guide rods 14.

Advantageously, the mounting step provides for the mounting of multiple positioning devices 12, so as to allow a nearly uniform filling of the maturation volume during the loading step, in which such actuation devices are inserted adjoining each other, e.g. on two levels, as described above, or, otherwise, on only one level, or on three or more levels, depending on the dimensions of the maturation tank 3. Advantageously, the present process also comprises a centering step, preceding the mounting step, and such step provides for arranging a centering template 9 comprising a base plate 90 and multiple retention elements 91, which project from a perimeter edge 90' of the base plate 90 itself, and between them delimit a housing seat 92 for the aromatizing slats 13.

The centering step also provides for arranging the guide rods 14 in the housing seat 92 placed substantially parallel to the retention elements 91.

Advantageously, such centering step allows easily stacking the aromatizing slats 13 during the mounting step. Indeed, the retention elements 91 projecting perimetrically from the first face 901 of the base plate 90 facilitate the step of inserting the aromatizing slats 13, since they allow centering them in the aforesaid housing seat 92.

In particular, the fixing elements coupled to the guide rods 14 at the two lower ends of the latter are engaged, advantageously by shape coupling, with the engagement elements 93 fixed to the first face 901 of the base plate 90 of the mounting template 9.

Advantageously, the engagement elements of the mounting template 9 are counter-shaped with respect to the fixing elements of the positioning device 12 such that they can be engaged with the latter, exerting a mutual pressure on each other.

Preferably, once the mounting step of the positioning device 12 is terminated, the latter is disengaged from the centering template and placed in the maturation volume of the maturation tank 3 or, otherwise, the positioning device 12 is placed in the maturation volume still engaged with the centering template 9, and, once positioned, the centering template 9 is disengaged from the positioning device 12 and extracted from the maturation volume such that it can be used in a new centering step.

The invention thus conceived therefore attains the pre-established objects.

## Claims

1. Plant (1) for maturing a fermented liquid (L), which comprises:
- a support structure (2);
- a maturation tank (3), which is mounted on said support structure (2) and is intended to contain a plurality of aromatizing products (11);
- a washing tank (4), which is mounted on said support structure (2) and is intended to contain at least one washing fluid;
- a connection circuit (5), which hydraulically connects said maturation tank (3) and said washing tank (4), and which comprises:
- a delivery line (51), which is extended between a first end (51'), intended to be connected to a containment tank (10) containing said fermented liquid (L), and an opposite second end (51"), hydraulically connected to said maturation tank (3);
- a return line (52), which is extended between a first termination (52'), hydraulically connected to said maturation tank (3), and an opposite second termination (52"), intended to be connected to said containment tank (10) containing said fermented liquid (L);
- an introduction line (53), which is hydraulically connected to said washing tank (4) and to said delivery line (51), at a first branch point (510), for the introduction of said washing fluid from said washing tank (4) to said maturation tank (3);
- a re-entry line (54), which is hydraulically connected to said washing tank (4) and to said return line (52), at a second branch point (520), for the re-entry of said washing fluid from said maturation tank (3) to said washing tank (4);
- a first valve group (6), which is placed to intercept said connection circuit (5), at said first branch point (510) and is actuatable for selectively adjusting the flow to said maturation tank (3) of said fermented liquid (L) or of said washing fluid;
- a second valve group (60), which is placed to intercept said connection circuit (5), at said second branch point (520) and is actuatable for selectively adjusting the flow from said maturation tank (3) of said fermented liquid (L) to said containment tank (10) or of said washing fluid to said washing tank (4);
- pumping means (7), which are placed to intercept said connection circuit (5), at said delivery line (51), downstream of said first branch point (510), or at said return line (52), upstream of said second branch point (520);
said pumping means (7) being arranged for forcing the circulation of said fermented liquid (L) and/or of said washing fluid along said connection circuit (5).

2. Plant (1) according to claim 1, **characterized in that**:
- said first valve group (6) is provided with at least one first valve (61) and with a second valve (62), which are placed to intercept said connection circuit (5), upstream of said maturation tank (3), and are actuatable for selectively adjusting the flow to said maturation tank (3) of said fermented liquid (L) or of said washing fluid;
- said second valve group (60) is provided with at least one third valve (63) and with a fourth valve (64), which are placed to intercept said connection circuit (5), downstream of said maturation tank (3), and are actuatable for selectively adjusting the flow from said maturation tank (3) of said fermented liquid (L) to said containment tank (10) or of said washing fluid to said washing tank (4).

3. Plant (1) according to any one of the preceding claims, **characterized in that** it comprises an inertization tank (8), which is intended to contain an inert fluid and is placed in fluid connection with said delivery line (51), downstream of said first branch point (510), in order to inject said inert fluid at least into said connection circuit (5).

4. Plant (1) according to claim 3, **characterized in that** said inertization tank (8) is placed in fluid connection with said return line (52), upstream of said second branch point (520), in order to inject said inert fluid at least into said connection circuit (5).

5. Plant (1) according to any one of the preceding claims, **characterized in that** said maturation tank (3) is rotatably connected to said support structure (2) and is rotatable between an operative position, substantially vertical, and a fill position, in which it is placed tilted in order to facilitate operations of filling and/or emptying of said maturation tank (3).

6. Plant (1) according to any one of the preceding claims, **characterized in that** said aromatizing products (11) are in the form of aromatizing slats (13);
said plant (1) comprising at least one positioning device (12) on which said aromatizing slats (13) are intended to be mounted;
said positioning device (12) comprising:
- at least two guide rods (14) engageable in corresponding through holes (130) of said aromatizing slats (13);
- multiple spacer elements (17) slidably engageable in said guide rods (14), each said spacer element (17) being intended to be interposed between two said adjacent aromatizing slats (13).

7. Process for maturing a fermented liquid (L) through a plant (1) according to any one of the preceding claims, **characterized in that** it comprises:
- a step of arranging a containment tank (10) of one said fermented liquid (L);
- a connection step, in which said containment tank (10) is connected to said connection circuit (5);
- a loading step, in which said aromatizing products (11) are inserted in said maturation tank (3);
- an actuation step, in which said first valve group (6) is actuated for allowing the flow of said fermented liquid (L) from said delivery line (51) to said maturation tank (3) and said second valve group (60) is actuated for allowing the return of said fermented liquid (L) from said maturation tank (3) to said containment tank (10) through said return line (52);
- a maturation step, in which said pumping means (7) are actuated for forcing said fermented liquid (L) to flow along said circulation circuit (5) and introduce said fermented liquid into said maturation tank (3) in order to place said fermented liquid (L) in contact with said aromatizing products (11) and mature said fermented liquid (L);
- a switching step, in which said first valve group (6) is actuated for allowing the introduction of said washing fluid from said introduction line (51) to said maturation tank (3) and said second valve group (60) is actuated for allowing the re-entry of said washing fluid from said maturation tank (3) to said washing tank (4) through said re-entry line (54).
- a washing step, in which said pumping means (7) are actuated for forcing said washing fluid to circulate along said connection circuit (5).

8. Process according to claim 7 through a plant according to claim 3 or 4, **characterized in that** it comprises at least one first inertization step, preceding said maturation step, in which said inert fluid flows from said inertization tank (8) along said connection circuit (5) from said delivery line (51) in order to remove oxygen from said connection circuit (5).

9. Process according to claim 8 through a plant according to claim 4, **characterized in that** it comprises at least one second inertization step, following said first maturation step, in which said inert fluid flows from said inertization tank (8) along said connection circuit (5) from said return line (52), in order to at least partially remove said fermented liquid (L) from said connection circuit (5).

10. Process according to any one of the claims 7 to 9 through a plant according to claim 6, **characterized in that** it comprises a mounting step, which provides for:
- arranging said guide rods (14);
- inserting a first said aromatizing slat (13) in said guide rods (14) through the corresponding said through holes (130);
- inserting at least one said spacer element (17) in one corresponding said guide rod (14);
- inserting a second said aromatizing slat (13) in said guide rods (14) through the corresponding said through holes (130) with said spacer element (17) interposed between said first and said second aromatizing slat (13).

11. Process according to claim 10 through a plant according to claim 6, **characterized in that** it comprises a centering step, preceding said mounting step, and such centering step provides for:
- arranging a centering template (9) comprising a base plate (90) and multiple retention elements (91), which project from a perimeter edge (90') of said base plate (90) and between them delimit a housing seat (92) of said aromatizing slats (13);
- arranging said guide rods (14) in said housing seat (92) placed substantially parallel to said retention elements (91).
